(19) Europäisches Patentamt
European Patent Office
Office européen des brevets

(11) Publication number: 0 089 082
B1

(12) # EUROPEAN PATENT SPECIFICATION

(45) Date of publication of patent specification: 24.07.85

(51) Int. Cl.⁴: **A 23 D 3/00**, C 11 C 3/10, C 11 B 7/00, C 11 C 3/02

(21) Application number: 83200325.5

(22) Date of filing: 08.03.83

(54) **Margarine fat blend, and a process for producing said fat blend.**

(30) Priority: 12.03.82 GB 8207358
02.04.82 NL 8201407

(43) Date of publication of application:
21.09.83 Bulletin 83/38

(45) Publication of the grant of the patent:
24.07.85 Bulletin 85/30

(84) Designated Contracting States:
AT BE CH DE FR GB IT LI NL SE

(56) References cited:
EP-A-0 041 303

CHEMICAL ABSTRACTS, vol. 83, no. 9, 1st September 1975, page 523, no. 77255h, Columbus, Ohio, USA
CHEMICAL ABSTRACTS, vol. 82, no. 25, 23rd June 1975, page 391, no. 169040s, Columbus, Ohio, USA, T.S RED'KO et al.: "Use of cottonseed oil in the production of solid confectionary fats"

(73) Proprietor: UNILEVER NV
Burgemeester s'Jacobplein 1 P.O. Box 760
NL-3000 DK Rotterdam (NL)
(84) BE CH DE FR IT LI NL SE AT

(73) Proprietor: UNILEVER PLC
Unilever House Blackfriars P O Box 68
London EC4P 4BQ (GB)
(84) GB

(72) Inventor: Schijf, Robert
Louise de Colignylaan 23
NL-3136 NL Vlaardingen (NL)
Inventor: Trommelen, August Maria
Willem de Zwijgerlaan 55
NL-3136 AR Vlaardingen (NL)
Inventor: Lansbergen, Gabriel Jacobus Theodorus
Iepstraat 8
NL-2691 EX 's-Gravenzande (NL)

(74) Representative: Léon, Alain Elie, Dr. et al
Unilever N.V. Patent Division P.O. Box 137
NL-3130 AC Vlaardingen (NL)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).



Courier Press, Leamington Spa, England.

**Description**

The present invention relates to a fat blend suitable for producing margarines and spreads with a reduced fat content, particularly water-in-oil emulsion spreads with a relatively high level of polyunsaturated fatty acids, and to a process for producing said fat blend.

Fat blends suitable for producing such margarines and spreads comprise a liquid oil, which means an oil which at 10°C is substantially free from crystallized fat, and a fat with a relatively high melting point, the so-called hardstock forming a matrix wherein the liquid oil is entrapped.

It is important for a margarine or spread to be easily spreadable without displaying oil exudation. It is also important that the margarine has a certain consistency at a temperature within the range of 15—25°C. These requirements set a limit to the level of liquid oil which is the major source of polyunsaturated fatty acids, particularly of the linoleic type.

Efforts have been made to reduce as much as possible the level of hardstock in order to improve the oral response of margarine produced from said hardstock and increase the ratio of polyunsaturated fatty acid residues to saturated fatty acid residues, to achieve a value preferably ranging from 3.0 to 4.0. Reducing the level of hardstock to less than 10 wt% of the total fat blend turned out to be extremely difficult, since such low levels of hardstock result in an insufficient consistency of the final product. On the other hand, increasing the level of polyunsaturated fatty acids by incorporating substantial amounts of oils rich in linoleic acid such as safflower oil is uneconomical.

Applicants have found a new fat blend comprising a liquid oil and a relatively small proportion of a hardstock, which when incorporated in margarines leads to a consistency or hardness (expressed in C-value) which is higher than one would expect given said relatively small proportion of hardstock.

The use of such hardstock at relatively low levels enables the production of margarines with good organoleptic properties, due to the presence of relatively low proportions of high-melting fats, and with a high ratio of polyunsaturated to saturated fatty acids.

Applicants have further found a process for the preparation of margarine fat blends.

The present invention is based on the discovery that triglycerides having a carbon number ranging from 44 to 48, i.e. triglycerides from 2 saturated $C_{16-18}$-fatty acids and 1 saturated $C_{12-14}$-fatty acids, can constitute a very efficient hardstock, which means a hardstock which may be used at relatively low levels in products wherein such a property is highly desirable (particularly dietetic margarines).

The fat blend according to the invention comprises:

— 70—96 wt% of a liquid oil (i) which at 10°C is substantially free from crystallized fat;
— 4—30 wt% of a fat (ii) in which 55—100 wt.% of the triglycerides consist of triglycerides (b) having a carbon number ranging from 44 to 48 and 0—45 wt.% of the triglycerides consist of triglycerides (a) having a carbon number ranging from 34 to 42 and triglycerides (c) having a carbon number ranging from 50 to 54.

The liquid oil (i) preferably consists of triglycerides in which at least 40% of the fatty acid residues are of the polyunsaturated type, such as sunflower oil, soybean oil, maize oil, safflower oil, grapeseed oil or mixtures thereof. Ideally oil (i) consists of sunflower oil, because it is readily available in large quantities at reasonable price and has good organoleptic properties. Said oil preferably constitutes 88 to 96 wt% of the total fat blend.

Fat (ii), the hardstock component of the fat blend, preferably constitutes 4—12% by weight of the total fat blend. Triglycerides (b) comprise predominantly triglycerides from 2 saturated or mono-trans fatty acids with a chain length of 16 or more carbon atoms and preferably 16 or 18 carbon atoms and 1 saturated fatty acid with a chain length of 12 or 14 carbon atoms. Fat (ii) preferably contains 60 to 100% of triglycerides (b) which have a carbon number ranging from 44 to 48. By carbon number is meant the sum of the carbon atoms in the 3 fatty acid residues in the triglyceride molecules.

Triglycerides (a), constituting part of fat (ii), may comprise the following triglycerides:

$$HML,\ M_3,\ M_2H,\ M_2L,\ HL_2,\ ML_2 \text{ and } L_3,$$

wherein

H is a saturated or a mono-trans fatty acid residue with 16 or more carbon atoms,

M is a saturated fatty acid residue with 12 to 14 carbon atoms,

L is a saturated fatty acid residue with less than 12 carbon atoms.

Triglycerides (b) predominantly consist of $H_2M$ triglycerides as hereinbefore defined.

Triglycerides (c) predominantly consist of $H_3$ triglycerides as hereinbefore defined.

When the production of dietetic margarines is envisaged, the level of hardstock is kept at a minimum value, e.g. between 4 and 12 wt.%, in order to achieve a ratio of polyunsaturated fatty acid residues (linoleic acid) to saturated fatty acid residues preferably ranging from 3.0 to 4.0.

Fat (ii) can be obtained by interesterification, preferably random interestification, of a mixture of triglycerides wherein the ratio of H- to M-fatty acids is within the range of 0.4 to 8.5, preferably 1.0 to 3.0.

Random interesterification is carried out under moisture-free conditions, preferably at 110—140°C in a

vacuum of about 2 mm Hg, in the presence of a catalyst such as an alkali alkoxide, an alkalimetal or an alkalimetal hydroxide.

It is also possible to produce fat (ii) by esterification of a suitable mixture of fatty acids with glycerol, for instance according to the following procedure:

One part of glycerol is mixed with about 3.5 to 3.8 parts of the fatty acids blend. The mixture of fatty acids and glycerol is rapidly heated in a jacketed vessel to a temperature of about 190°C, and subsequently maintained, for at least three hours, at a temperature of 220°C to 225°C. The reaction is carried out, while stirring under atmospheric pressure in a vessel which is closed from the air by nitrogen. During the reaction, water is removed by distillation. After 3 to 4 hours' reaction time, the free fatty acid content of the mixture is determined. When the free fatty content remains unchanged, the reaction is finished and the excess of fatty acids is removed by distillation at a temperature of 240°C, at a pressure of 5 mm mercury. During distillation the free fatty acid content is determined again and as soon as an acid value of 4 is obtained, the reaction is stopped and the product is cooled to a temperature of 90°C. The hard fat mixture obtained is subsequently alkali-refined and bleached.

Fat (ii) is preferably produced by randomly interesterifying a partly or fully hydrogenated fat (b) selected from coconut-, babassu-, palmkernel-, tucum-, murumuru-, ouricurum-fat, mixtures thereof or fractions thereof having a melting point ranging from 30 to 41°C, with a fat (b), which can be fully or partly hydrogenated, fractionated or non-fractionated, wherein at least 60% of the fatty acid residues are $C_{16}$- or $C_{18}$-fatty acid residues. Fat (b) is preferably selected from palmfat, soybean oil, groundnut oil, sunflower oil, maize oil, rapeseed oil, having a melting point ranging from 50 to 71°C; and fractionating the interesterified mixture.

Fat blends containing a hardstock component similar to fat (ii) of the present invention are described in EP—A—0041303. Such a hardstock component contains triglycerides (b) having a carbon number ranging from 44 to 48 but the level of said triglycerides (b) is well below the lower limit of the range claimed in the present invention. Consequently the amount of hardstock required for achieving a given consistency in margarines containing a high proportion of liquid oils will be higher than in comparable margarines produced from fat blends according to the invention.

The relatively high level of triglycerides (b) is achieved by fractionation of the interesterified mixture in the absence of a solvent (dry-fractionation), in the presence of an organic solvent (wet fractionation) such as acetone or hexane, or in an aqueous solution of a surface-active agent (so-called Lanza fractionation), under conditions such that part and preferably the bulk of triglycerides (a) and (c) as hereinbefore defined is removed to yield a hardstock preferably having the following triglyceride composition:

Triglycerides (a) : 0—20 wt.%
Triglycerides (b) : 55—100 wt.%, ideally 65—100 wt.%
Triglycerides (c) : 0—20 wt.%.

Fractionation is preferably carried out in an organic solvent, preferably in acetone and preferably in 2 or more steps, the first being performed at 22—33°C, preferably 24—29°C, to obtain a higher melting stearin fraction mainly containing triglycerides from 3 saturated fatty acids of the H-type as hereinbefore defined, and a lower melting olein fraction, which is further fractionated at 12—24°C, preferably 15—22°C, to obtain a second stearin fraction containing 55—100 wt.%, preferably 65—100 wt.% of triglycerides (b), 0—25 wt.%, preferably 0—10 wt.% of triglycerides (a) and 0—20 wt.%, preferably 0—10 wt.% of triglycerides (c).

It is also possible to perform a first fractionation at 12—24°C to yield a stearin and an olein fraction and subsequently to fractionate the stearin at 22—33°C to yield a second stearin and a second olein [mid fraction enriched in triglycerides (b)].

Another useful fractionation method consists in mixing the mixture to be fractionated with a liquid oil such as soybean or sunflower oil and to perform the fractionation preferably in 2 steps, the first step being carried out at 22—33°C, preferably at 24—29°C, and the second step at 12—24°C, preferably at 15—22°C, to obtain a mid-fraction enriched in triglycerides (b).

In making margarines, or other edible plastic fat-in-water emulsions, the fat blends according to the invention can be emulsified in a conventional way with an aqueous phase, at a temperature at which the fat is liquid. The emulsion is then subjected to rapid chilling, in a conventional surface-scraped heat exchanger, e.g. a Votator apparatus, as described in "Margarine" by Andersen and Williams, Pergamon Press (1965), page 246 et seq.

The aqueous phase can contain additives which are customary for margarine, for example emulsifying agents, salt and flavours. Oil-soluble additives e.g. flavouring compounds, vitamins etc. can be included in the fatty phase. Generally the proportion of fatty phase in a margarine varies from about 75 to 84% of the emulsion depending on local statutory requirements for margarine. Alternatively high proportions of the aqueous phase can be adopted in the production of so-called low-fat spreads or duplex spreads (O/W/O emulsions). The margarines and spreads according to the invention have a hardness expressed in C-value of at least 100 g/cm$^2$ and preferably from 220 to 400 g/cm$^2$ at 5°C, and at least 70 g/cm$^2$, preferably 100—250 g/cm$^2$ at 20°C.

It is a great advantage of the present invention, that margarine fats can be prepared containing a

relatively small amount of the hardstock component and consequently a large quantity of liquid oil from which margarine can be made of sufficient hardness for tub-filling.

The invention will now be illustrated by the following examples:

Examples 1 and 2

A hardstock was produced by esterifying glycerol with $C_{16}$-, $C_{18}$-, $C_{12-14}$-fatty acids, in proportions such that triglycerides of the $H_2M$ type were obtained. The composition of the hardstock is given in Table 1.

Margarines were produced in a Votator using this hardstock at a level of 7 and 9%, along with 93% and 91%, respectively, of sunflower oil as the fatty phase and an aqueous phase (16% by weight of the total product). The fat solids profile and hardness are given in Table 2.

TABLE 1

| Type of triglyceride | wt.% |
|---|---|
| 16 12 16 | 5.7 |
| 16 14 16 | 1.8 |
| 18 12 16 | 14.2 |
| 18 12 18 | 8.8 |
| 18 14 18 | 2.8 |
| 16 16 12 | 11.4 |
| 16 16 14 | 3.6 |
| 18 16 12 | 14.2 |
| 16 18 12 | 14.2 |
| 18 18 12 | 17.7 |
| 18 18 14 | 5.6 |

These margarines were compared with a margarine containing 87 wt.% sunflower oil and 13 wt.% of a non-fractionated fat obtained by random interestification of equal amounts of palmkernel fat (m.p. 39°C) and palm fat (m.p. 58°C).

The interesterified mixture contained the same triglycerides as the synthetic mixture as well as other triglycerides.

TABLE 2

| Margarine prepared from | Example (1) 7 wt% synthetic hardstock and 93 wt% sunflower oil | Example (2) 9 wt% synthetic hardstock and 91 wt% sunflower oil | Comparative example 13 wt% non-fractionated hardstock stock and 87 wt% sunflower oil |
|---|---|---|---|
| Solids | | | |
| N10 | 7.9 | 10.3 | 11.2 |
| N20 | 4.3 | 6.6 | 6.9 |
| N30 | 0.0 | 0.0 | 2.7 |
| N35 | 0.0 | 0.0 | 1.0 |
| Hardness 3d 15°C, 1 d m.t.* | | | |
| C5 | 195 | 320 | 205 |
| C10 | 195 | 330 | 155 |
| C15 | 165 | 285 | 135 |
| C20 | 135 | 225 | 69 |

* 3 days at 15°C—1 day at measuring temperature.

It is apparent from this table that margarines produced with a lower level of fractionated fat have an almost equal or higher hardness than the margarine produced with the non-fractionated fat.

The ratio of polyunsaturated to saturated fatty acids was 3.4 (for the sample containing 9% hardstock) and 3.8 (for the sample containing 7% hardstock. The ratio for the comparative sample was 2.7.

Examples 3 and 4

A hardstock was produced by randomly interesterifying a mixture consisting of equal amounts of fully hardened palmkernel fat (m.p. 39°C) and fully hardened palm fat (m.p. 58°C) under nitrogen using 0.2% of sodium methoxide at 80°C for a period of about 1/2 hour. The catalyst was destroyed by adding water. The fat was washed, dried and deodorized.

The interestified mixture was fractionated in acetone. The ratio fat mixture:acetone was about 1:5.

A first fractionation was carried out at 26°C. This fractionation yielded a stearin and an olein fraction. The olein fraction was subsequently fractionated at 20°C into a second stearin fraction and a second olein fraction.

The triglyceride composition was analysed by GLC. The results are summarized in Table 3.

The second stearin contained 17.2 wt% of triglycerides with a carbon number C of 44, 29,8 wt% of triglycerides with C46, 25.0 wt% of triglycerides with C48, all falling within the definition of the present invention for $H_2M$ [triglycerides (b)].

Thus, the total percentage of $H_2M$ triglycerides in this fraction was 72 wt%.

Margarines were produced in a Votator starting from an aqueous phase (16 wt%) and a fatty phase (84 wt%), consisting of

(1) a fat blend containing 7% of the second stearin as hardstock and 93% sunflower oil; and

(2) 10% of the second stearin as hardstock and 91% of sunflower oil.

As a reference a margarine was produced using 13% of a hardstock obtained by randomly interesterifying the same mixture as above but omitting (the double) fractionation.

The solid fat percentage (expressed as N-values, were determined as described in J.Am.Oil Chemists' Soc., Vol. *51*, (1974), page 316), the hardness (expressed in C-values, was determined as described in J.A.O.C.S. *36* (1959), page 345—348).

From Table 4 it is clear that the hardness at 20°C at levels of hardstock of 7 wt.% and 9 wt.% of the margarine according to the invention is superior to the hardness of the margarine obtained with the non-fractionated hardstock used at a level of 13 wt.%.

The products according to the invention were easily spreadable at room temperature and had a good oral response when tested by a panel of experts.

TABLE 3
Analytical data of the interestified blend and the fractions obtained from the acetone fractionation

| | Interesterified blend | Stearin | Olein | 2nd stearin | 2nd olein |
|---|---|---|---|---|---|
| Fraction temp. | — | 26°C | | 20°C | |
| yield (%) | 100 | 33 | 67 | 13 | 54 |
| N10 | 95.3 | 97.4 | 93.3 | 97.0 | 91.7 |
| N20 | 90.7 | 97.2 | 81.4 | 96.2 | 72.1 |
| N30 | 69.6 | 96.4 | 40.8 | 92.8 | 21.3 |
| N35 | 49.0 | | 9.5 | 81.8 | 2.2 |
| N40 | 27.5 | 91.7 | 0.4 | 39.6 | |
| N45 | 9.0 | | | 0 | |
| N50 | 0 | 45.1 | | | |
| Tri 34/Di 32 | 7.6 | 0.7 | 11.9 | 0.9 | 14.2 |
| * Tri 36/Di 34 | 5.0 | 0.7 | 7.4 | 0.9 | 9.0 |
| Tri 38/Di 36 | 5.8 | 0.8 | 8.4 | 1.4 | 10.2 |
| Tri 40 | 8.1 | 1.3 | 11.6 | 3.9 | 3.6 |
| Tri 42 | 12.5 | 3.2 | 17.2 | 10.4 | 19.0 |
| Tri 44 | 11.5 | 6.6 | 14.0 | 17.2 | 13.1 |
| Tri 46 | 15.2 | 16.0 | 14.5 | 29.8 | 10.4 |
| Tri 48 | 13.9 | 22.2 | 9.3 | 25.0 | 5.1 |
| Tri 50 | 8.3 | 19.7 | 2.2 | 5.9 | 1.3 |
| Tri 52 | 7.6 | 19.1 | 1.5 | 2.7 | 1.5 |
| Tri 54 | 4.1 | 9.2 | 1.5 | 1.3 | 2.2 |

TABLE 3 (contd.)

| | | | | | |
|---|---|---|---|---|---|
| C 8:0 | 1.7 | 0.2 | 2.6 | 0.5 | 3.6 |
| ** C 10:0 | 1.7 | 0.4 | 2.5 | 0.9 | 3.0 |
| C 12:0 | 23.8 | 10.5 | 31.0 | 25.8 | 33.4 |
| C 14:0 | 8.6 | 7.1 | 9.3 | 9.2 | 9.5 |
| C 16:0 | 25.4 | 30.3 | 22.5 | 25.4 | 21.3 |
| C 18:0 | 35.5 | 50.5 | 28.0 | 37.2 | 25.4 |
| C 18:1 | 2.1 | — | 2.9 | — | 3.4 |
| C 18:2 | 0.3 | — | 0.5 | — | 0.5 |
| rest | 0.9 | 1.0 | 0.7 | 0.9 | 0.8 |

* GLC di/triglycerides in wt.%
** GLC fatty acids in wt.%

TABLE 4

| Margarines produced from | Example 3<br>7 wt% of fractionated hardstock (2nd stearin) and 93 wt% sunflower oil | Example 4<br>10 wt% of fractionated hardstock (2nd stearin) and 90 wt% sunflower oil | Comparative Ex.<br>13 wt% of non-fractionated hardstock |
|---|---|---|---|
| Solids | | | |
| N10 | 7.0 | 10.3 | 11.2 |
| N20 | 3.6 | 6.2 | 6.9 |
| N30 | 0.0 | 1.7 | 2.7 |
| N35 | 0.0 | 0.2 | 1.0 |
| Hardness<br>3 weeks' storage at measuring temperature | | | |
| C5 | 240 | 370 | 280 |
| C10 | 185 | 325 | 160 |
| C15 | 190 | 310 | 140 |
| C20 | 130 | 200 | 95 |

The ratio of polyunsaturated fatty acids to saturated fatty acids was 3.8 (for the sample containing 7 wt.% of hardstock) and 3.2 (for the sample containing 10 wt. of hardstock).

In the comparative example this ratio was 2.7.

**Claims for the Contracting States BE CH DE FR GB IT LI NL SE**

1. A margarine fat blend comprising: 70—96 wt.% of a liquid oil (i) which at 10°C is substantially free from crystallized fat; and 4—30 wt.% of a fat (ii) in which 55—100 wt.% of the triglycerides consist of

triglycerides (b) having a carbon number ranging from 44 to 48, and 0—45 wt.% of the triglycerides consist of triglycerides (a) having a carbon number ranging from 34 to 42 and triglycerides (c) having a carbon number ranging from 50 to 54.

2. A margarine fat blend according to claim 1, wherein the level of triglycerides (a) in fat (ii) ranges from 0 to 25 wt.%.

3. A margarine fat blend according to claim 1, wherein the level of triglycerides (c) in fat (ii) ranges from 0 to 20 wt.%.

4. A margarine fat blend according to claim 1, wherein oil (i) constitutes 88—96 wt.% and fat (ii) constitutes 4—12 wt.% of the total fat blend and the ratio of polyunsaturated to saturated fatty acids ranges from 3.0 to 4.0.

5. A margarine fat blend according to any one of claims 1—4, wherein oil (i) consists of triglycerides in which at least 40% of the fatty acid residues are of the polyunsaturated type.

6. A margarine fat blend according to claim 5, in which oil (i) has been selected from sunflower oil, safflower oil, soybean oil, maize oil and rapeseed oil.

7. A process for producing a fat blend according to any one of the preceding claims 1—6, comprising mixing 70—96 wt.% of a liquid oil (i) which at 10°C is substantially free from crystallized fat, with 4—30 wt.% of a fat (ii) in which 55—100% of the triglycerides have a carbon number ranging from 44 to 48.

8. A process according to claim 7, wherein fat (ii) is obtained by random interesterification of a mixture of triglycerides in which the ratio of saturated $C_{16-18}$-fatty acids to saturated $C_{12-14}$-fatty acids ranges from 0.4 to 8.5, and fractionation of the interesterified mixture.

9. A process according to claim 8, wherein the ratio of saturated $C_{16-18}$-fatty acids to saturated $C_{12-14}$-fatty acids ranges from 1.0 to 3.0.

10. A process according to claim 8, wherein fat (ii) is produced by randomly interesterifying a partly or fully hydrogenated, fractionated or non-fractionated fat (a) selected from coconut-, ouricurum- babassu-, palmkernel-, tacum- and murumuru-fat, with a partly or fully hydrogenated, fractionated or non-fractionated fat (b) wherein at least 60% of the saturated fatty acid residues contain 16 or 18 carbon atoms.

11. A process according to claim 9, wherein a fat (a) having a melting point ranging from 30 to 41°C and a fat (b) having a melting point ranging from 50 to 71°C are used.

12. A process according to claim 10, wherein fat (b) consists of hydrogenated palm oil, soybean oil, ground nut oil, sunflower oil, rapeseed oil, maize oil or mixtures thereof.

13. A process according to claim 8, wherein fractionation of the interesterified mixture is carried out in the presence of an organic solvent.

14. A process according to claim 13, wherein fractionation is carried out in the presence of acetone.

15. A process according to claim 14, wherein the fractionation is carried out in two steps, the first step being performed at 22—33°C to obtain a higher melting stearin fraction which is discarded, and a lower melting olein fraction which is further fractionated at 12—24°C to obtain a second stearin containing at least 55% of triglycerides having a carbon number ranging from 44 to 48.

16. A process according to claim 15, wherein the first step is carried out at 24—29°C and the second step at 15—22°C.

17. A process according to claim 14, wherein a first fractionation is carried out at 12—24°C to yield a higher melting stearin fraction and a lower melting olein fraction and subsequently a second fractionation of the stearin fraction is carried out at 22—33°C to yield a second stearin and a second olein containing at least 55% of triglycerides having a carbon number ranging from 44 to 48.

18. A process according to claim 7, wherein fat (ii) is obtained by esterifying glycerol with a mixture comprising $C_{12}$-, $C_{14}$-, $C_{16}$- and $C_{18}$ fatty acids.

19. A process according to any one of the preceding claims 7—18, wherein a fat (ii) is used which has the following triglyceride composition: triglycerides (b) with a carbon number ranging from 44 to 48=55—100 wt.%, the sum of the level of triglycerides (a) with a carbon number ranging from 34 to 42 and the level of triglycerides (c) with a carbon number ranging from 50 to 54 being up to 45 wt.%.

20. A process according to claim 19, wherein a fat (ii) is used in which the level of triglycerides (a) ranges from 0 to 25 wt.%.

21. A process according to claim 19, wherein a fat (ii) is used in which the level of triglycerides (c) ranges from 0 to 20 wt.%.

22. A process according to claim 7, wherein 88—96 wt.% of oil (i) are mixed with 4—12 wt.% of fat (ii), to obtain a fat blend in which the ratio of polyunsaturated to saturated fatty acids ranges from 3.0 to 4.0.

23. A process according to any one of the preceding claims 7—22, wherein oil (i) consists of triglycerides in which at least 40% of the fatty acid residues are of the polyunsaturated type.

24. A process for producing margarines and low-fat spreads, comprising (1) emulsifying an aqueous phase in a fat blend obtainable according to any one of the preceding claims 7—19 and (2) cooling and texturizing the emulsion obtained to yield a product having a hardness expressed in C-value of at least 100 g/cm$^2$ at 5°C and at least 70 g/cm$^2$ at 20°C.

25. A process according to claim 24, wherein the product has a hardness expressed in C-value of 220—400 g/cm$^2$ at 5°C and of 100—250 g/cm$^2$ at 20°C.

**Claims for the Contracting State AT**

1. A process for producing a margarine fat blend, comprising: mixing 70—96 wt.% of a liquid oil (i) which at 10°C is substantially free from crystallized fat, with 4—30 wt.% of a fat (ii) in which 55—100% of the triglycerides have a carbon number ranging from 44 to 48.

2. A process according to claim 1, wherein fat (ii) is obtained by random interesterification of a mixture of triglycerides in which the ratio of saturated $C_{16-18}$-fatty acids to saturated $C_{12-14}$-fatty acids ranges from 0.4 to 8.5, and fractionation of the interesterified mixture.

3. A process according to claim 2, wherein the ratio of saturated $C_{16-18}$-fatty acids to saturated $C_{12-14}$-fatty acids ranges from 1.0 to 3.0.

4. A process according to claim 2, wherein fat (ii) is produced by randomly interesterifying a partly or fully hydrogenated, fractionated or non-fractionated fat (a) selected from coconut- ouricurim- babassu-, palmkernel-, tucum- and murumuru-fat, with a partly or fully hydrogenated, fractionated or non-fractionated fat (b) wherein at least 60% of the saturated fatty acid residues contain 16 or 18 carbon atoms.

5. A process according to claim 3, wherein a fat (a) having a melting point ranging from 30 to 41°C and a fat (b) having a melting point ranging from 50 to 71°C are used.

6. A process according to claim 4, wherein fat (b) consists of hydrogenated palm oil, soybean oil, groundnut oil, sunflower oil, rapeseed oil, maize oil or mixtures thereof.

7. A process according to claim 2, wherein fractionation of the interesterified mixture is carried out in the presence of an organic solvent.

8. A process according to claim 7, wherein fractionation is carried out in the presence of acetone.

9. A process according to claim 8, wherein the fractionation is carried out in two steps, the first step being performed at 22—33°C to obtain a higher melting stearin fraction which is discarded, and a lower melting olein fraction which is further fractionated at 12—24°C to obtain a second stearin containing at least 55% of triglycerides having a carbon number ranging from 44 to 48.

10. A process according to claim 9, wherein the first step is carried out at 24—29°C and the second step at 15—22°C.

11. A process according to claim 8, wherein a first fractionation is carried out at 12—24°C to yield a higher melting stearin fraction and a lower melting olein fraction and subsequently a second fractionation of the stearin fraction is carried out at 22—33°C to yield a second stearin and a second olein containing at least 55% of triglycerides having a carbon number ranging from 44 to 48.

12. A process according to claim 1, wherein fat (ii) is obtained by esterifying glycerol with a mixture comprising $C_{12}$-, $C_{14}$-, $C_{16}$- and $C_{18}$ fatty acids.

13. A process according to any one of the preceding claims 1—12, wherein a fat (ii) is used which has the following triglyceride composition: triglycerides (b) with a carbon number ranging from 44 to 48=55—100 wt.%, the sum of the level of triglycerides (a) with a carbon number ranging from 34 to 42 and the level of triglycerides (c) with a carbon number ranging from 50 to 54 being up to 45 wt.%.

14. A process according to claim 13, wherein a fat (ii) is used in which the level of triglycerides (a) ranges from 0 to 25 wt.%.

15. A process according to claim 13, wherein a fat (ii) is used in which the level of triglycerides (c) ranges from 0 to 20 wt.%.

16. A process according to claim 1, wherein 88—96 wt.% of oil (i) are mixed with 4—12 wt.% of fat (ii), to obtain a fat blend in which the ratio of polyunsaturated to saturated fatty acids ranges from 3.0 to 4.0.

17. A process according to any one of the preceding claims 1—16, wherein oil (i) consists of triglycerides in which at least 40% of the fatty acid residues are of the polyunsaturated type.

18. A process according to claim 17, wherein oil (i) is selected from sunflower oil, safflower oil, soybean oil, maize oil and rapeseed oil.

19. A process for producing margarines and low-fat spreads, comprising (1) emulsifying an aqueous phase in a fat blend obtainable according to any one of the preceding claims 1—18 and (2) cooling and texturizing the emulsion obtained to yield a product having a hardness expressed in C-value of at least 100 $g/cm^2$ at 5°C and at least 70 $g/cm^2$ at 20°C.

20. A process according to claim 19, wherein the product has a hardness expressed in C-value of 220—400 $g/cm^2$ at 5°C and of 100—250 $g/cm^2$ at 20°C.

**Patentansprüche für die Vertragsstaaten BE, CH, DE, FR, GB, IT, LI, NL, SE**

1. Margarinefettzusammensetzung, enthaltend 70 bis 96 Gew.-% eines flüssigen Öles (i), welches bei 10°C praktisch frei von kristallisiertem Fett ist, und 4 bis 30 Gew.-% eines Fettes (ii), worin 55 bis 100 Gew.-% der Triglyceride aus Triglyceriden (b) mit einer Kohlenstoffzahl im Bereich von 44 bis 48 und 0 bis 45 Gew.-% der Triglyceride aus Triglyceriden (a) mit einer Kohlenstoffzahl im Bereich von 34 bis 42 und Triglyceriden (c) mit einer Kohlenstoffzahl im Bereich von 50 bis 54 bestehen.

2. Margarinefettzusammensetzung nach Anspruch 1, dadurch gekennzeichnet, daß die Menge der Triglyceride (a) im Fett (ii) im Bereich von 0 bis 25 Gew.-% liegt.

3. Margarinefettzusammensetzung nach Anspruch 1, dadurch gekennzeichnet, daß die Menge der Triglyceride (c) im Fett (ii) im Bereich von 0 bis 20 Gew.-% liegt.

4. Margarinefettzusammensetzung nach Anspruch 1, dadurch gekennzeichnet, daß das Öl (i) 88 bis 96 Gew.-% und das Fett (ii) 4 bis 12 Gew.-% der gesamten Fettzusammensetzung bilden, und das Verhältnis von mehrfach ungesättigten zu gesättigten Fettsäuren im Bereich von 3,0 bis 4,0 liegt.

5. Margarinefettzusammensetzung nach beliebigen der Ansprüche 1 bis 4, dadurch gekennzeichnet, daß das Öl (i) aus Triglyceriden besteht, worin mindestens 40 % der Fettsäurereste von mehrfach ungesättigter Art sind.

6. Margarinefettzusammensetzung nach Anspruch 5, dadurch gekennzeichnet, daß das Öl (i) aus Sonnenblumenöl, Safloröl, Sojabohnenöl, Maisöl und Rapssamenöl gewählt ist.

7. Verfahren zur Herstellung einer Fettzusammensetzung nach beliebigen der vorstehenden Ansprüche 1 bis 6, dadurch gekennzeichnet, daß 70 bis 96 Gew.-% eines flüssigen Öles (i), welches bei 10°C praktisch frei von kristallisiertem Fett ist, mit 4 bis 30 Gew.-% eines Fettes (ii), worin 55 bis 100 % der Triglyceride eine Kohlenstoffzahl im Bereich von 44 bis 48 besitzen, vermischt wird.

8. Verfahren nach Anspruch 7, dadurch gekennzeichnet, daß das Fett (ii) durch randomisierte Umesterung eines Gemisches von Triglyceriden, worin das Verhältnis der gesättigten $C_{16-18}$-Fettsäuren zu gesättigten $C_{12-14}$-Fettsäuren im Bereich von 0,4 bis 8,5 liegt, und Fraktionierung des umgeesterten Gemisches erhalten wird.

9. Verfahren nach Anspruch 8, dadurch gekennzeichnet, daß das Verhältnis von gesättigten $C_{16-18}$-Fettsäuren zu gesättigten $C_{12-14}$-Fettsäuren im Bereich von 1,0 bis 3,0 liegt.

10. Verfahren nach Anspruch 8, dadurch gekennzeichnet, daß das Fett (ii) durch randomisierte Umesterung eines teilweise oder vollständig hydrierten, fraktionierten oder nicht-fraktionierten Fettes (a), das aus Kokosnuß-, Ouricurum-, Babassu-, Palmkern-, Tucum- und Murumuru-Fett gewählt ist, mit einem teilweise oder vollständig hydrierten, fraktionierten oder nichtfraktionierten Fett (b), worin mindestens 60 % der gesättigten Fettsäurereste 16 oder 18 Kohlenstoffatome enthalten, hergestellt wird.

11. Verfahren nach Anspruch 9, dadurch gekennzeichnet, daß ein Fett (a) mit einem Schmelzpunkt im Bereich von 30 bis 41°C und ein Fett (b) mit einem Schmelzpunkt im Bereich von 50 bis 71°C verwendet werden.

12. Verfahren nach Anspruch 10, dadurch gekennzeichnet, daß das Fett (b) aus hydriertem Palmöl, Sojabohnenöl, Erdnußöl, Sonnenblumenöl, Rapssamenöl, Maisöl oder Gemischen hiervon besteht.

13. Verfahren nach Anspruch 8, dadurch gekennzeichnet, daß die Fraktionierung des umgeesterten Gemisches in Gegenwart eines organischen Lösungsmittels durchgeführt wird.

14. Verfahren nach Anspruch 13, dadurch gekennzeichnet, daß die Fraktionierung in Gegenwart von Aceton durchgeführt wird.

15. Verfahren nach Anspruch 14, dadurch gekennzeichnet, daß die Fraktionierung in zwei Stufen durchgeführt wird, wobei die erste Stufe bei 22 bis 33°C unter Bildung einer höher schmelzenden Stearinfraktion, die verworfen wird, und einer niedriger schmelzenden Oleinfraktion, die weiterhin bei 12 bis 24°C zur Bildung eines zweiten Stearins mit einem Gehalt von mindestens 55 % an Triglyceriden mit einer Kohlenstoffzahl von 44 bis 48 fraktioniert wird, ausgeführt wird.

16. Verfahren nach Anspruch 15, dadurch gekennzeichnet, daß die erste Stufe bei 24 bis 29°C und die zweite Stufe bei 15 bis 22°C durchgeführt wird.

17. Verfahren nach Anspruch 14, dadurch gekennzeichnet, daß eine erste Fraktionierung bei 12 bis 24°C unter Bildung einer höher schmelzenden Stearinfraktion und einer niedriger schmelzenden Oleinfraktion und anschließend eine zweite Fraktionierung der Stearinfraktion bei 22 bis 33°C unter Bildung eines zweiten Stearins und eines zweiten Oleins, das mindestens 55 % an Triglyceriden mit einer Kohlenstoffzahl im Bereich von 44 bis 48 enthält, durchgeführt werden.

18. Verfahren nach Anspruch 7, dadurch gekennzeichnet, daß das Fett (ii) durch Veresterung von Glycerin mit einem Gemisch, welches $C_{12}$-, $C_{14}$-, $C_{16}$- und $C_{18}$-Fettsäuren enthält, erhalten wurde.

19. Verfahren nach einem der vorstehenden Ansprüche 7 bis 18, dadurch gekennzeichnet, daß ein Fett (ii) verwendet wird, welches die folgende Triglyceridzusammensetzung besitzt: Triglyceride (b) mit einer Kohlenstoffzahl im Bereich von 44 bis 48=55 bis 100 Gew.-%, wobei die Summe der Menge der Triglyceride (a) mit einer Kohlenstoffzahl im Bereich von 34 bis 42 und der Menge der Triglyceride (c) mit einer Kohlenstoffzahl im Bereich von 50 bis 54 bis zu 45 Gew.-% beträgt.

20. Verfahren nach Anspruch 19, dadurch gekennzeichnet, daß ein Fett (ii) verwendet wird, worin die Menge der Triglyceride (a) im Bereich von 0 bis 25 Gew.-% liegt.

21. Verfahren nach Anspruch 19, dadurch gekennzeichnet, daß ein Fett (ii) verwendet wird, worin die Menge der Triglyceride (c) im Bereich von 0 bis 20 Gew.-% liegt.

22. Verfahren nach Anspruch 7, dadurch gekennzeichnet, daß 88 bis 96 Gew.-% des Öles (i) mit 4 bis 12 Gew.-% des Fettes (ii) unter Bildung einer Fettzusammensetzung vermischt werden, worin das Verhältnis von mehrfach ungesättigten zu gesättigten Fettsäuren im Bereich von 3,0 bis 4,0 liegt.

23. Verfahren nach beliebigen der vorstehenden Ansprüche 7 bis 22, dadurch gekennzeichnet, daß das Öl (i) aus Triglyceriden, worin mindestens 40 % der Fettsäurereste vom mehrfach ungesättigten Typ sind, besteht.

24. Verfahren zur Herstellung von Margarinen und Aufstrichen mit niedrigem Fettgehalt, dadurch gekennzeichnet, daß (1) eine wäßrige Phase in einer Fettzusammensetzung, die nach beliebigen der vorstehenden Ansprüche 7 bis 19 erhältlich ist, emulgiert wird und (2) die erhaltene Emulsion unter Bildung

eines Produktes mit einer Härte, angegeben als C-Wert, von mindestens 100 g/cm$^2$ bei 5°C und mindestens 70 g/cm$^2$ bei 20°C gekühlt und texturiert wird.

25. Verfahren nach Anspruch 24, dadurch gekennzeichnet, daß das Produkt eine Härte, angegeben als C-Wert, von 220 bis 400 g/cm$^2$ bei 5°C und von 100 bis 250 g/cm$^2$ bei 20°C besitzt.

**Patentansprüche für den Vertragsstaat AT**

1. Verfahren zur Herstellung einer Margarinefettzusammensetzung, dadurch gekennzeichnet, daß 70 bis 96 Gew.-% eines flüssigen Öles (i), welches bei 10°C praktisch frei von kristallisiertem Fett ist, mit 4 bis 30 Gew.-% eines Fettes (ii), worin 55 bis 100 % der Triglyceride eine Kohlenstoffzahl im Bereich von 44 bis 48 besitzen, vermischt werden.

2. Verfahren nach Anspruch 1, dadurch gekennzeichnet, daß das Fett (ii) durch randomisierte Umesterung eines Gemisches von Triglyceriden, worin das Verhältnis von gesättigten $C_{16-18}$-Fettsäuren zu gesättigten $C_{12-14}$-Fettsäuren im Bereich von 0,4 bis 8,5 liegt, und Fraktionierung des umgeesterten Gemisches erhalten wird.

3. Verfahren nach Anspruch 2, dadurch gekennzeichnet, daß das Verhältnis der gesättigten $C_{16-18}$-Fettsäuren zu gesättigten $C_{12-14}$-Fettsäuren im Bereich von 1,0 bis 3,0 liegt.

4. Verfahren nach Anspruch 2, dadurch gekennzeichnet, daß das Fett (ii) durch randomisierte Umesterung eines teilweise oder vollständig hydrierten, fraktionierten oder nicht-fraktionierten Fettes (a), das aus Kokosnuß-, Ouricurum-, Babassu-, Palmkern-, Tucum- und Murumuru-Fett gewählt ist, mit einem teilweise oder vollständig hydrierten, fraktionierten oder nichtfraktionierten Fett (b), worin mindestens 60 % der gesättigten Fettsäurereste 16 oder 18 Kohlenstoffatome enthalten, hergestellt wird.

5. Verfahren nach Anspruch 3, dadurch gekennzeichnet, daß ein Fett (a) mit einem Schmelzpunkt im Bereich von 30 bis 41°C und ein Fett (b) mit einem Schmelzpunkt im Bereich von 50 bis 71°C verwendet werden.

6. Verfahren nach Anspruch 4, dadurch gekennzeichnet, daß das Fett (b) aus hydriertem Palmöl, Sojabohnenöl, Erdnußöl, Sonnenblumenöl, Rapssamenöl, Maisöl oder Gemischen biervon besteht.

7. Verfahren nach Anspruch 2, dadurch gekennzeichnet, daß die Fraktionierung des umgeesterten Gemisches in Gegenwart eines organischen Lösungsmittels durchgeführt wird.

8. Verfahren nach Anspruch 7, dadurch gekennzeichnet, daß die Fraktionierung in Gegenwart von Aceton durchgeführt wird.

9. Verfahren nach Anspruch 8, dadurch gekennzeichnet, daß die Fraktionierung in zwei Stufen durchgeführt wird, wobei die erste Stufe bei 22 bis 33°C unter Bildung einer höher schmelzenden Stearinfraktion, die verworfen wird, und einer niedriger schmelzenden Oleinfraktion, die weiterhin bei 12 bis 24°C unter Bildung eines zweiten Stearins, das mindestens 55 % Triglyceride mit einer Kohlenstoffzahl im Bereich von 44 bis 48 enthält, fraktioniert wird, ausgeführt wird.

10. Verfahren nach Anspruch 9, dadurch gekennzeichnet, daß die erste Stufe bei 24 bis 29°C und die zweite Stufe bei 15 bis 22°C durchgeführt wird.

11. Verfahren nach Anspruch 8, dadurch gekennzeichnet, daß eine erste Fraktionierung bei 12 bis 24°C unter Bildung einer höher schmelzenden Stearinfraktion und einer niedriger schmelzenden Oleinfraktion durchgeführt wird und anschließend eine zweite Fraktionierung der Stearinfraktion bei 22 bis 33°C unter Bildung eines zweiten Stearins und eines zweiten Oleins mit einem Gehalt von mindestens 55 % an Triglyceriden mit einer Kohlenstoffzahl im Bereich von 44 bis 48 durchgeführt wird.

12. Verfahren nach Anspruch 1, dadurch gekennzeichnet, daß das Fett (ii) durch Veresterung von Glycerin mit einem Gemisch, welches $C_{12}$-, $C_{14}$-, $C_{16}$- und $C_{18}$-Fettsäuren enthält, erhalten wird.

13. Verfahren nach beliebigen der vorstehenden Ansprüche 1 bis 12, dadurch gekennzeichnet, daß ein Fett (ii) verwendet wird, welches die folgende Triglyceridzusammensetzung aufweist: Triglyceride (b) mit einer Kohlenstoffzahl im Bereich von 44 bis 48=55 bis 100 Gew.-%, wobei die Summe der Menge der Triglyceride (a) mit einer Kohlenstoffzahl im Bereich von 34 bis 42 und der Menge der Triglyceride (c) mit einer Kohlenstoffzahl im Bereich von 50 bis 54 bis zu 45 Gew.-% beträgt.

14. Verfahren nach Anspruch 13, dadurch gekennzeichnet, daß ein Fett (ii) verwendet wird, worin die Menge der Triglyceride (a) im Bereich von 0 bis 25 Gew.-% liegt.

15. Verfahren nach Anspruch 13, dadurch gekennzeichnet, daß ein Fett (ii) verwendet wird, worin die Menge der Triglyceride (c) im Bereich von 0 bis 20 Gew.-% liegt.

16. Verfahren nach Anspruch 1, dadurch gekennzeichnet, daß 88 bis 96 Gew.-% des Öles (i) mit 4 bis 12 Gew.-% des Fettes (ii) unter Bildung einer Fettzusammensetzung vermischt werden, worin das Verhältnis von mehrfach ungesättigten zu gesättigten Fettsäuren im Bereich von 3,0 bis 4,0 liegt.

17. Verfahren nach beliebigen der vorstehenden Ansprüche 1 bis 16, dadurch gekennzeichnet, daß das Öl (i) aus Triglyceriden besteht, worin mindestens 40 % der Fettsäurereste vom mehrfach ungesättigten Typ sind.

18. Verfahren nach Anspruch 17, dadurch gekennzeichnet, daß das Öl (i) aus Sonnenblumenöl, Safloröl, Sojabohnenöl, Maisöl und Rapssamenöl gewählt ist.

19. Verfahren zur Herstellung von Margarinen und Aufstrichen mit niedrigem Fettgehalt, dadurch gekennzeichnet, daß (1) eine wäßrige Phase in einer Fettzusammensetzung, die nach beliebigen der vorstehenden Ansprüche 1 bis 18 erhältlich ist, emulgiert wird und (2) die erhaltene Emulsion unter Bildung

eines Produktes mit einer Härte, angegeben als C-Wert, von mindestens 100 g/cm² bei 5°C und mindestens 70 g/cm² bei 20°C gekühlt und texturiert wird.

20. Verfahren nach Anspruch 19, dadurch gekennzeichnet, daß das Produkt eine Härte, angegeben als C-Wert, von 220 bis 400 g/cm² bei 5°C und von 100 bis 250 g/cm² bei 20°C besitzt.

**Revendications pour les Etats Contractants: BE CH DE FR GB IT LI NL SE**

1. Mélange gras pour margarine comprenant: 70 à 96% pds d'une huile liquide (i) qui à 10°C est sensiblement exempte de graisse critallisée; et de 4 à 30% pds d'une graisse (ii) dans laquelle 55 à 100% pds des triglycérides consistent en triglycérides (b) ayant un nombre d'atomes de carbone compris entre 44 et 48 et 0 à 45% pds des triglycérides consistent en triglycérides (a) ayant un nombre d'atomes de carbone compris entre 34 et 42 et en glycérides (c) ayant un nombre d'atomes de carbone de 50 à 54.

2. Mélange gras pour margarine selon la revendication 1, dans lequel le niveau des triglycérides (a) dans la graisse (ii) est compris entre 0 et 25% pds.

3. Mélange gras pour margarine selon la revendication 1, dans lequel le niveau de triglycérides (c) dans la graisse (ii) est compris entre 0 et 20% pds.

4. Mélange gras pour margarine selon la revendication 1, dans lequel l'huile (i) constitue 88 à 96% pds et la graisse (ii) constitue 4 à 12% pds du mélange gras total et le rapport des acides gras polyinsaturés aux acides gras saturés est de 3,0 à 4,0.

5. Mélange gras selon l'une quelconque des revendications 1 à 4, dans lequel l'huile (i) consiste en triglycérides dans lesquels au moins 40% des résidus d'acides gras sont du type polyinsaturé.

6. Mélange gras pour margarine selon la revendication 5, dans lequel l'huile (i) a été choisie parmi l'huile de tournesol, l'huile de carthame, l'huile de soja, l'huile de maïs et l'huile de colza.

7. Procédé de production d'un mélange gras selon l'une quelconque des revendications 1 à 6, qui consiste à mélanger 70 à 96% pds d'huile liquide (i) qui à 10°C est sensiblement exempte de graisse cristallisée, avec 4 à 30% pds d'une graisse (ii) dans laquelle 55 à 100% des triglycérides contiennent de 44 à 48 atomes de carbone.

8. Procédé selon la revendication 7, dans lequel on obtient la graisse (ii) par interestérification statistique d'un mélange de triglycérides dans lequel le rapport des acides gras saturés en $C_{16-18}$ aux acides gras saturés en $C_{12->4}$ est compris entre 0,4 et 8,5 et on fractionne le mélange interestérifié.

9. Procédé selon la revendication 8, dans lequel le rapport des acides gras saturés en $C_{16-18}$ aux acides gras saturés en $C_{12-14}$ est compris entre 1,0 et 3,0.

10. Procédé selon la revendication 8, dans lequel on produit la graisse (ii) par interestérification statistique d'une graisse (a) partiellement ou totalement hydrogénée, fractionnée ou non fractionnée et choisie parmi les graisses de noix de coco, d'ouricurum, de babassu, de coeur de palmier, de tucum et de murumuru, avec une graisse (b) partiellement ou entièrement hydrogénée, fractionnée ou non fractionnée dans laquelle au moins 60% des résidus d'acides gras saturés contiennent 16 ou 18 atomes de carbone.

11. Procédé selon la revendication 9, dans lequel on utilise une graisse (a) ayant un point de fusion de 30 à 41°C et une graisse (b) ayant un point de fusion de 50 à 71°C.

12. Procédé selon la revendication 10, dans lequel la graisse (b) consiste en huile de palme hydrogénée, huile de soja, huile d'arachide, huile de tournesol, huile de colza, huile de maïs ou des mélanges de cellesci.

13. Procédé selon la revendication 8, dans lequel on effectue le fractionnement du mélange interestérifié en présence d'un solvant organique.

14. Procédé selon la revendication 13, dans lequel on effectue le fractionnement en présence d'acétone.

15. Procédé selon la revendication 14, dans lequel on effectue le fractionnement en deux stades, le premier stade étant exécuté à 22—33°C pour obtenir une fraction de stéarine d'un poids moléculaire plus élevé qu'on met au rebut et une fraction d'oléine de plus bas poids moléculaire qu'on fractionne à 12—24°C, pour obtenir une seconde stéarine qui contient au moins 55% de triglycérides de 44 à 48 atomes de carbone.

16. Procédé selon la revendication 15, dans lequel on effectue le premier stade à 24—29°C et le second stade à 15—22°C.

17. Procédé selon la revendication 14, dans lequel on effectue un premier fractionnement à 12—24°C pour obtenir une fraction de stéarine d'un poids moléculaire plus élevé et une fraction d'oléine d'un plus bas poids moléculaire et on effectue ensuite un second fractionnement de stéarine à 22—33°C pour donner une seconde stéarine et une seconde oléine contenant au moins 55% de triglycérides qui sont de 44 à 48 atomes de carbone.

18. Procédé selon la revendication 7, dans lequel on obtient la graisse (ii) en estérifiant du glycérol avec un mélange comprenant des acides gras en $C_{12}$, $C_{14}$, $C_{16}$ et $C_{18}$.

19. Procédé selon l'une quelconque des revendications 7 à 18, dans lequel on utilise la graisse (ii) ayant la composition suivante de triglycérides: triglycérides (b) de 44 à 48 atomes de carbone=55 à 100% pds, la somme du niveau des triglycérides (a) contenant 34 à 42 atomes de carbone et du niveau de triglycérides (c) contenant 50 à 54 atomes de carbone pouvant atteindre 45% pds.

20. Procédé selon la revendication 19, dans lequel on utilise une graisse (ii) dans laquelle le niveau de triglycérides (a) est de 0 à 25% pds.

21. Procédé selon la revendication 19, dans lequel on utilise une graisse (ii) dans laquelle le niveau des triglycérides (c) est de 0 à 20% pds.

22. Procédé selon la revendication 7, dans lequel on mélange 88 à 96% pds d'huile (i) avec 4 à 12% pds de graisse (ii) pour obtenir un mélange gras dans lequel le rapport des acides gras polyinsaturés aux acides gras saturés est de 3,0 à 4,0.

23. Procédé selon l'une quelconque des revendications 7 à 22, dans lequel l'huile (i) consiste en triglycérides dans lesquels au moins 40% des résidus d'acides gras sont du type polyinsaturé.

24. Procédé de production de margarine et de produits à tartiner pauvres en matières grasses, qui consiste (1) à émulsionner une phase aqueuse sand un mélange gras obtenu selon l'une quelconque des revendications 7 à 19 et (2) à refroidir et texturiser l'émulsion obtenue pour donner un produit ayant une dureté exprimée en valeurs C d'au moins 100 g/cm$^2$ à 5°C et d'au moins 70 g/cm$^2$ à 20°C.

25. Procédé selon la revendication 24, dans lequel le produit a une dureté exprimée en valeurs C de 220 à 400 g/cm$^2$ à 5°C et de 100 à 250 g/cm$^2$ à 20°C.

**Revendications pour l'Etat Contractant: AT**

1. Procédé de production d'un mélange gras pour margarine consistant: à mélanger 70—96% pds d'une huile liquide (i) qui à 10°C est sensiblement exempte de graisse cristallisée avec 4 à 30% pds d'une graisse (ii) dans laquelle 55 à 100% des triglycérides ont un nombre d'atomes de carbone de 44 à 48.

2. Procédé selon la revendication 1, dans lequel on obtient la graisse (ii) par interestérification statistique d'un mélange de triglycérides dans lequel le rapport des acides gras saturés en $C_{16-18}$ aux acides gras saturés en $C_{12-14}$ est compris entre 0,4 et 8,5 et on fractionne le mélange interestérifié.

3. Procédé selon la revendication 2, dans lequel le rapport des acides gras saturés en $C_{16-18}$ aux acides gras saturés en $C_{12-14}$ est de 1,0 à 3,0.

4. Procédé selon la revendication 2, dans lequel on produit la graisse (ii) par interestérification statistique d'une graisse (a) partiellement ou totalement hydrogénée, fractionnée ou non fractionnée et choisie parmi les graisses de noix de coco, d'ouricurum, de babassu, de coeur de palmier, de tucum et de murumuru, avec une graisse (b) partiellement ou entièrement hydrogénée, fractionnée ou non fractionnée dans laquelle au moins 60% des résidus d'acides gras saturés contiennent 16 ou 18 atomes de carbone.

5. Procédé selon la revendication 3, dans lequel on utilise une graisse (a) ayant un point de fusion de 30 à 41°C et une graisse (b) ayant un point de fusion de 50 à 71°C.

6. Procédé selon la revendication 4, dans lequel la graisse (b) consiste en huile de palme hydrogénée, huile de soja, huile d-arachide, huile de tournesol, huile de colza, huile de maïs ou des mélanges de celles-ci.

7. Procédé selon la revendication 2, dans lequel on effectue le fractionnement du mélange interestérifié en présence d'un solvant organique.

8. Procédé selon la revendication 7, dans lequel on effectue le fractionnement en présence d'acétone.

9. Procédé selon la revendication 8, dans lequel on effectue le fractionnement en deux stades, le premier stade étant exécuté à 22—33°C pour obtenir une fraction de stéarine d'un poids moléculaire plus élevé qu'on met au rebut et une fraction d'oléine de plus bas poids moléculaire qu'on fractionne à 12—24°C, pour obtenir une seconde stéarine qui contient au moins 55% de triglycérides de 44 à 48 atomes de carbone.

10. Procédé selon la revendication 9, dans lequel on effectue le premier stade à 24—29°C et le second stade à 15—22°C.

11. Procédé selon la revendication 8, dans lequel on effectue un premier fractionnement à 12—24°C pour obtenir une fraction de stéarine d'un poids moléculaire plus élevé et une fraction d'oléine d'un plus bas poids moléculaire et on effectue ensuite un second fractionnement de la fraction de stéarine à 22—33°C pour donner une seconde stéarine et une seconde oléine contenant au moins 55% de triglycérides qui sont de 44 à 48 atomes de carbone.

12. Procédé selon la revendication 1, dans lequel on obtient la graisse (ii) en estérifiant du glycérol avec un mélange comprenant des acides gras en $C_{12}$, $C_{14}$, $C_{16}$ et $C_{18}$.

13. Procédé selon l'une quelconque des revendications 1 à 12, dans lequel on utilise la graisse (ii) ayant la composition suivante de triglycérides: triglycérides (b) de 44 à 48 atomes de carbone=55 à 100% pds, la somme du niveau des triglycérides (a) contenant 34 à 42 atomes de carbone et du niveau de triglycérides (c) contenant 50 à 54 atomes de carbone pouvant atteindre 45% pds.

14. Procédé selon la revendication 13, dans lequel on utilise une graisse (ii) dans laquelle le niveau de triglycérides (a) est de 0 à 25% pds.

15. Procédé selon la revendication 13, dans lequel on utilise une graisse (ii) dans laquelle le niveau de triglycérides (c) est de 0 à 20% pds.

16. Procédé selon la revendication 1, dans lequel on mélange 88 à 96% pds d'une huile (i) avec 4 à 12% pds d'une graisse (ii) pour obtenir un mélange gras dans lequel le rapport des acides gras polyinsaturés aux acides gras saturés est de 3,0 à 4,0.

17. Procédé selon l'une quelconque des revendications 1 à 16, dans lequel l'huile (i) consiste en triglycérides dont 40% au moins des résidus d'acides gras sont du type polyinsaturé.

18. Procédé selon la revendication 17, dans lequel on choisit l'huile (i) parmi l'huile de tournesol, l'huile de carthame, l'huile de soja, l'huile de maïs et l'huile de colza.

19. Procédé de production de margarine et de produits à tartiner pauvres en matières grasses qui consiste (1) à émulsionner une phase aqueuse dans un mélange gras obtenu selon l'une quelconque des revendications 1 à 18 et (2) à refroidir et texturiser l'émulsion obtenue pour donner un produit ayant une dureté exprimée en valeurs C d'au moins 100 $g/cm^2$ à 50°C et d'au moins 70 $g/cm^2$ à 20°C.

20. Procédé selon la revendication 19, dans lequel le produit a une dureté exprimée en valeurs C de 220 à 400 $g/cm^2$ à 5°C et de 100 à 250 $g/cm^2$ à 20°C.